# FASCICULE DE BREVET EUROPEEN

(11) **EP 1 178 190 B1**
(45) Date de publication et mention de la délivrance du brevet: **10.05.2006**
(21) Numéro de dépôt: 01402077.0
(22) Date de dépôt: 01.08.2001
(51) Int. Cl.: F02B 31/04, F02D 41/14

(54) **Procédé et dispositif de contrôle de la combustion d'un moteur à combustion interne équipé d'un générateur de turbulence variable**
Verfahren und Vorrichtung zum Steuern der Verbrennung einer Brennkraftmaschine mit Variabelturbulenzgenerator
Method and device to control the combustion of an IC engine equipped with a variable-turbulence generator

(30) Priorité: 02.08.2000 FR 0010212
(43) Date de publication de la demande: 06.02.2002
(73) Titulaire: Renault s.a.s., 92100 Boulogne Billancourt (FR)
(72) Inventeur: Guezet, Jacky, 78990 Elancourt (FR); Van Frank, Jean, 92500 Rueil Malmaison (FR)
(74) Mandataire: Davies, Owen Robert Treharne

(56) Documents cités:
- WO-A-98/37322
- US-A- 5 551 392
- US-A- 5 640 941
- US-A- 5 670 715
- US-A- 5 904 127
- PATENT ABSTRACTS OF JAPAN vol. 1996, no. 07, 31 juillet 1996 (1996-07-31) & JP 08 074583 A (HITACHI LTD), 19 mars 1996 (1996-03-19)

## Description

L'invention concerne les moteurs à combustion interne, et plus particulièrement le contrôle de la combustion.

Dans l'optique d'une diminution toujours accrue de la consommation et des polluants dans les moteurs, le fonctionnement en mélange pauvre est l'une des solutions les plus prometteuses. Afin d'obtenir un fonctionnement optimum sur toute la plage de fonctionnement de ce type de moteur, il est nécessaire d'adjoindre des systèmes qui engendrent des turbulences variables. La turbulence ayant un effet important sur la vitesse de combustion, l'optimisation du fonctionnement du moteur passe par l'ajustement du niveau de turbulence afin d'obtenir une bonne qualité de combustion.

Différents systèmes ont déjà été développés dans le but de faire varier le taux de turbulence pendant le fonctionnement d'un moteur thermique. On peut citer à cet égard les brevets américains No. 5 913 298 et No. 5 787 851, ainsi que la demande de brevet européen No. 0 676 533. Selon cet art antérieur, le réglage de ces générateurs de turbulence variable est effectué à partir de tables de consignes calibrées pour différents points de fonctionnement du moteur.

Néanmoins, avec de tels systèmes, l'influence du générateur de turbulence variable sur la qualité de la combustion n'est pas optimisée.

L'invention vise à apporter une solution à ce problème.

L'invention propose donc un procédé de contrôle de la combustion d'un moteur à combustion interne équipé d'un générateur de turbulence variable, ce générateur étant commandé à partir de consignes de commande calibrées pour différents points de fonctionnement du moteur. Selon une caractéristique générale de l'invention, on contrôle ladite combustion en corrigeant lesdites consignes de commande calibrées à partir d'une mesure du courant d'ionisation des gaz de combustion, et en commandant le générateur de turbulence variable avec ces consignes de commande corrigées.

L'invention permet ainsi, quel que soit le point de fonctionnement du moteur (régime, pression collecteur d'admission) d'obtenir l'aérodynamique interne la plus propice à une combustion optimale.

Contrairement aux commandes classiques des générateurs à turbulence variable, utilisant des tables de réglages prédéterminées (ou calibrées), l'invention corrige ces valeurs calibrées de commande du générateur de turbulence variable afin d'obtenir un rendement optimal du moteur.

Une autre caractéristique intéressante de l'invention réside dans le fait que l'on utilise la mesure du courant d'ionisation des gaz de combustion pour optimiser l'influence du générateur de turbulence variable sur la qualité de la combustion d'un mélange pauvre.

Certes, les capteurs d'ionisation sont connus et ont fait l'objet déjà de nombreux développements par plusieurs constructeurs automobiles, et notamment le demandeur. On peut citer à cet égard les demandes de brevet français No. 96 10 342 et No. 97 15 967. Cependant, jusqu'à maintenant, les capteurs d'ionisation permettent d'accéder à diverses grandeurs caractéristiques de la combustion comme l'angle de pression maximale (demande de brevet suédois No. 504 197, ou demande de brevet internationale No. 96/05427) et sont utilisés dans de nombreux systèmes de contrôle de la combustion dans les moteurs à combustion interne, par exemple pour détecter le cliquetis (demande de brevet internationale No. 89/11087), les ratés de combustion (brevet américain No. 5 701 876) ou encore la richesse (demande de brevet internationale No. 98/37322, ou No. 96/22458). Par contre, la mesure du courant d'ionisation des gaz de combustion n'a jamais été utilisée pour optimiser l'influence d'un générateur de turbulence variable sur la qualité de la combustion d'un mélange pauvre.

Et, le fait d'utiliser ce courant d'ionisation pour déterminer l'angle de pression maximale permet d'obtenir une image fiable de la qualité de la combustion.

Selon un mode de mise en oeuvre du procédé selon l'invention, on élabore une première table contenant pour différents points de fonctionnement du moteur, différentes valeurs calibrées d'angle vilebrequin correspondant chacune à une pression maximale dans la chambre de combustion, ces différentes valeurs calibrées d'angle de pression maximale étant élaborées de façon à obtenir le rendement optimal du moteur.

On élabore une deuxième table définissant pour ces mêmes différents points de fonctionnement, les consignes de commande calibrées du générateur de turbulence variable correspondant auxdites valeurs calibrées d'angle de pression maximale.

Pour chaque point de fonctionnement du moteur, on extrait la consigne de commande calibrée correspondante, on mesure le courant d'ionisation des gaz de combustion et on en déduit une valeur d'angle de pression maximale mesurée. On corrige alors la consigne de commande calibrée extraite, en fonction de la différence entre la valeur calibrée d'angle de pression maximale et la valeur d'angle de pression maximale mesurée.

On commande le générateur de turbulence variable avec la consigne ainsi corrigée.

L'invention a également pour objet un dispositif de contrôle de la combustion d'un moteur à combustion interne équipé d'un générateur de turbulence variable, comprenant des moyens de commande aptes à commander le générateur à partir de consignes de commande calibrées pour différents points de fonctionnement du moteur.

Selon une caractéristique générale de l'invention, le dispositif comprend en outre une sonde d'ionisation apte à mesurer le courant d'ionisation des gaz de combustion. Les moyens de commande sont par ailleurs aptes à corriger lesdites consignes de commande calibrées à partir des indications délivrées par la sonde d'ionisation, et à commander le générateur de turbulence variable avec ces consignes de commande corrigées.

Selon un mode de réalisation du dispositif selon l'invention, les moyens de commande comportent
- une mémoire apte à stocker une première table contenant pour différents points de fonctionnement du moteur, différentes valeurs calibrées d'angle vilebrequin correspondant chacune à une pression maximale dans le chambre de combustion, ces différentes valeurs calibrées d'angle de pression maximale étant élaborées de façon à obtenir le rendement optimal du moteur, et une deuxième table définissant pour ces mêmes différents points, des consignes de commande calibrées du générateur de turbulence variable correspondant auxdites valeurs calibrées d'angle de pression maximale,
- un calculateur d'injection apte pour chaque point de fonctionnement du moteur, à extraire de la mémoire la consigne de commande calibrée correspondante, à déduire, à partir de la mesure du courant d'ionisation des gaz de combustion effectuée par la sonde d'ionisation, une valeur d'angle de pression maximale mesurée, et à corriger la consigne de commande calibrée extraite en fonction de la différence entre la valeur calibrée d'angle de pression maximale et la valeur d'angle de pression maximale mesurée, et
- un module de commande du générateur de turbulence variable, apte à recevoir ladite consigne de commande corrigée et à commander en conséquence ledit générateur.

D'autres avantages et caractéristiques de l'invention apparaîtront à l'examen de la description détaillée de modes de mise en oeuvre et de réalisation, nullement limitatifs, et du dessin annexé sur lequel la figure unique représente schématiquement un mode de réalisation d'un dispositif selon l'invention permettant une mise en oeuvre du procédé selon l'invention.

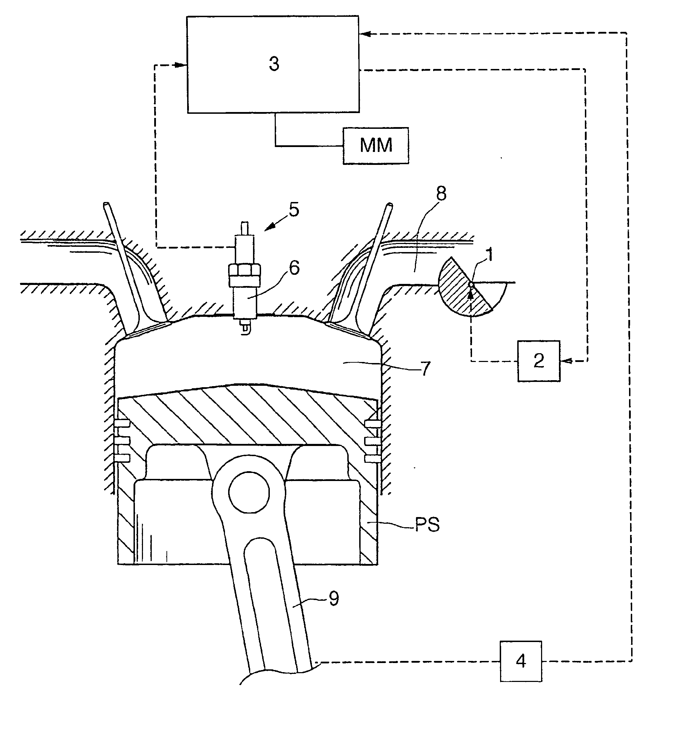

Sur la figure 1, la référence PS désigne un piston d'un moteur à combustion interne, définissant avec le cylindre dans lequel il coulisse, une chambre de combustion 7 dans laquelle débouche une sonde d'ionisation 6 montée dans une bougie d'allumage 5.

L'homme du métier sait que dans un moteur, l'angle vilebrequin correspondant à la pression maximale de la chambre de combustion est un bon indicateur de la qualité de la combustion et par conséquent du rendement du moteur.

La référence 4 désigne par ailleurs un capteur classique permettant de détecter la valeur instantanée de l'angle vilebrequin. Pour des raisons de simplification de la figure, on n'a pas représenté le vilebrequin mais uniquement la tige de piston 9 auquel elle est reliée.

Un autre élément essentiel permettant de contrôler la combustion du moteur à combustion interne est un générateur de turbulence variable que l'on a représenté sur cette figure de façon simplifiée par son volet 1 dont la position est réglable dans la pipe d'admission 8. La position du volet est commandée par un boîtier de commande 2.

La référence 3 désigne par ailleurs un calculateur d'injection, auquel sont reliés le boîtier de commande 2 du générateur de turbulence variable, ainsi que le capteur 4 de mesure de l'angle vilebrequin.

La sonde d'ionisation 6 est également reliée au calculateur d'injection.

Celui-ci est associé par ailleurs à une mémoire MM stockant une première table contenant pour différents points de fonctionnement du moteur (régime, pression, admission collecteur) différentes valeurs calibrées d'angle vilebrequin correspondant chacune à une pression maximale dans la chambre de combustion. Cette première table est réalisée de façon classique pour obtenir le rendement optimal du moteur.

La mémoire MM stocke également une deuxième table définissant, pour ces mêmes différents points de fonctionnement, les consignes de commande calibrées du générateur de turbulence variable correspondant auxdites valeurs calibrées d'angle de pression maximale. Cette deuxième table est par conséquent également calibrée de façon à obtenir un rendement optimal du moteur.

La sonde d'ionisation 6, montée dans la bougie d'allumage 5, est par exemple celle décrite dans la demande de brevet français No. 97 16128. L'évolution du courant d'ionisation dans la chambre de combustion, délivrée par la sonde d'ionisation 6, associée à la valeur de l'angle vilebrequin instantanée délivrée par le capteur 4, permet au calculateur d'injection de déterminer une valeur d'angle de pression maximale mesurée, en utilisant un algorithme de calcul bien connu de l'homme du métier étant donné que la valeur du courant d'ionisation est proportionnelle à la pression dans la chambre de combustion.

La position du volet 1 du générateur de turbulence est difficile à régler de façon précise pour obtenir le taux de turbulence voulu. Afin de résoudre ce problème, et obtenir le rendement optimal du moteur sur toute la plage de fonctionnement, le calculateur d'injection va, pour chaque point de fonctionnement considéré, appliquer une correction à la valeur de consigne calibrée de commande présente dans la deuxième table, cette correction étant proportionnelle à la différence entre la valeur d'angle de pression maximale mesurée par la sonde d'ionisation 6 et celle stockée dans la première table calibrée. Ainsi, l'invention permet de s'approcher au plus près de la valeur calibrée de l'angle de pression maximale en augmentant ou en diminuant le taux de turbulence par l'intermédiaire du générateur de turbulence variable, et ce, jusqu'à ce que la valeur de l'angle de pression maximale mesurée soit proche (par exemple à ± 1° vilebrequin) de la valeur calibrée correspondant au point de fonctionnement considéré.

## Revendications

1. Procédé de contrôle de la combustion d'un moteur à combustion interne équipé d'un générateur de turbulence variable, ce générateur (1, 2) étant commandé à partir de consignes de commande calibrées pour différents points de fonctionnement du moteur, **caractérisé par le fait qu'**on contrôle ladite combustion en corrigeant lesdites consignes de commande calibrées à partir d'une mesure du courant d'ionisation des gaz de combustion (6), et en commandant le générateur de turbulence variable avec ces consignes de commande corrigées.

2. Procédé selon la revendication 1, **caractérisé par le fait qu'**on élabore une première table contenant pour différents points de fonctionnement du moteur, différentes valeurs calibrées d'angle vilebrequin correspondant chacune à une pression maximale dans la chambre de combustion, ces différentes valeurs calibrées d'angle de pression maximale étant élaborées de façon à obtenir le rendement optimal du moteur, et on élabore une deuxième table définissant pour ces mêmes différents points de fonctionnement, les consignes de commande calibrées du générateur de turbulence variable correspondant auxdites valeurs calibrées d'angle de pression maximale,
**par le fait que** pour chaque point de fonctionnement du moteur, on extrait la consigne de commande calibrée correspondante, on mesure (6) le courant d'ionisation des gaz de combustion et on en déduit une valeur d'angle de pression maximale mesurée, et on corrige la consigne de commande calibrée extraite en fonction de la différence entre la valeur calibrée d'angle de pression maximale et la valeur d'angle de pression maximale mesurée, et **par le fait qu'**on commande (2) le générateur de turbulence variable avec la consigne corrigée.

3. Dispositif de contrôle de la combustion d'un moteur à combustion interne équipé d'un générateur de turbulence variable, comprenant des moyens de commande aptes à commander le générateur à partir de consignes de commande calibrées pour différents points de fonctionnement du moteur, **caractérisé par le fait qu'**il comprend en outre une sonde d'ionisation (6) apte à mesurer le courant d'ionisation des gaz de combustion, et **par le fait que** les moyens de commande sont aptes à corriger lesdites consignes de commande calibrées à partir des indications délivrées par la sonde d'ionisation, et à commander le générateur de turbulence variable (1, 2) avec ces consignes de commande corrigées.

4. Dispositif selon la revendication 3, **caractérisé par le fait que** les moyens de commande comportent
une mémoire (MM) apte à stocker une première table contenant pour différents point de fonctionnement du moteur, différentes valeurs calibrées d'angle vilebrequin correspondant chacune à une pression maximale dans la chambre de combustion, ces différentes valeurs calibrées d'angle de pression maximale étant élaborées de façon à obtenir le rendement optimal du moteur, et une deuxième table définissant pour ces mêmes différents points de fonctionnement, des consignes de commande calibrées du générateur de turbulence variable correspondant auxdites valeurs calibrées d'angle de pression maximale,
un calculateur d'injection (3) apte pour chaque point de fonctionnement du moteur, à extraire de la mémoire la consigne de commande calibrée correspondante, à déduire, à partir de la mesure du courant d'ionisation des gaz de combustion effectuée par la sonde d'ionisation, une valeur d'angle de pression maximale mesurée, et à corriger la consigne de commande calibrée extraite en fonction de la différence entre la valeur calibrée d'angle de pression maximale et la valeur d'angle de pression maximale mesurée,
et un module de commande (2) du générateur de turbulence variable, apte à recevoir ladite consigne de commande corrigée et commander en conséquence ledit générateur.

## Patentansprüche

1. Verfahren zur Steuerung der Verbrennung eines Verbrennungsmotors, welcher mit einem variablen Turbulenzgenerator ausgestattet ist, wobei dieser Generator (1,2) ausgehend von Steuersollwerten gesteuert wird, die für verschiedene Betriebspunkte des Motors kalibriert sind, **dadurch gekennzeichnet, dass** man die Verbrennung unter einem Korrigieren der kalibrierten Steuersollwerte ausgehend von einer Messung des Ionisierungsstroms der Verbrennungs gase (6) und unter einem Steuern des variablen Turbulenzgenerators mit diesen korrigierten Steuersollwerten steuert.

2. Verfahren nach Anspruch 1, **dadurch gekennzeichnet, dass** man eine erste Tabelle ausarbeitet, welche für verschiedene Betriebspunkte des Motors verschiedene kalibriede Kurbelwellenwinkelwerte ezatlzält, wobei jeder einem maximalen Druck in der Brennkammer entspricht, wobei diese verschiedenen kalibrierten Winkelwerte eines maximalen Drucks derart ausgearbeitet sind, um den optimalen Wirkungsgrad des Motors zu erhalten, und man eine zweite Tabelle ausarbeitet, welche für diese gleichen verschiedenen Betriebspunkte die kalibrierten Steuersollwerte des variablen Turbulenzgenerators definiert, welche den kalibrierten Winkelwerten eines maximalen Drucks entsprechen,
**dadurch**, dass man für jeden Betriebspunkt des Motors den entsprechenden kalibrierten Steuersollwert entnimmt, man den Ionisierungsstrom der Verbrennungsgase misst (6) und man daraus einen gemessenen. Winkelwert eines maximalen Drucks ableitet und man den entnommenen kalibrierten Steuersöllwert in Abhängigkeit von der Differenz zwischen dem kalibrieiten Winkelwert eines maximalen Drucks und dem gemessenen Winkelwert eines maximalen Drucks korrigiert, und **dadurch**, dass man den variablen Turbulenzgenerator mit dem korrigierten Sollwert steuert (2).

3. Vorrichtung zur Steuerung der Verbrennung eines Verbrennungsmotors, welcher mit einem variablen Turbulenzgenerator ausgestattet ist, welcher Steuermittel aufweist, die fähig sind, den Generator ausgehend von Steuersollwerten zu steuern, die für verschiedene Betriebspunkte des Motors kalibriert sind, **dadurch gekennzeichnet, dass** sie des Weiteren eine Ionisierungssonde (6) aufweist, die fähig ist, den Ionisierungsstrom von Verbrennungsgasen zu messen, und **dadurch**, dass die Steuermittel fähig sind, die kalibrierten Steuersollwerte ausgehend von Angaben zu korrigieren, welche durch die Ionisierungssonde geliefert werden, und den variablen Turbulenzgenerator (1, 2) mit diesen korrigierten Steuersollwerten zu steuern

4. Vorrichtung nach Anspruch 3, **dadurch gekennzeichnet, dass** die Steuermittel aufweisen:
einen Speicher (MM), der fähig ist, eine erste Tabelle, welche für verschiedene Betriebspunkte des Motors verschiedene kalibrierte Kurbelwellenwinkelwerte enthält, wobei jeder einem maximalen Druck in der Brennkammer entspricht, wobei diese verschiedenen kalibrierten Winkelwerte eines maximalen Drucks derart ausgearbeitet sind, um den optimalen Wirkungsgrad des Motors zu erhalten, und eine zweite Tabelle, welche für diese gleichen verschiedenen Betriebspunkte kalibrierte Steuersollwerte des variablen Turbulenzgenerators definiert, welche den kalibrierten Winkelwerten eines maximalen Drucks entsprechen, zu speichern,
einen Einspritzrechner (3), der fähig ist, für jeden Betriebspunkt des Motors aus dem Speicher den entsprechenden kalibrierten Steuersollwert zu entnehmen, ausgehend von der Messung des Ionisierungsstroms der Verbrennungsgase, welche durch die Ionisierungssonde ausgeführt wird, einen gemessenen Winkelwert eines maximalen Drucks abzuleiten und
den entnommenen kalibrierten Steuersollwert in Abhängigkeit von der Differenz zwischen dem kalibrierten Winkelwert eines maximalen Drucks und dem gemessenen Winkelwert eines maximalen Drucks zu korrigieren,
und ein Steuerungsmodul (2) des variablen Turbulenzgenerators das fähig ist, den korrigierten Steuersllwert zu empfangen und den Generator entsprechend zu steuern.

## Claims

1. A control method for the combustion of an internal combustion engine equipped with a variable turbulence generator, this generator (1, 2) being controlled from control references calibrated for different points of operation of the engine, **characterised in that** the combustion is controlled by correcting the calibrated control references from a measurement of the ionisation current of the combustion gases (6) and by controlling the variable turbulence generator with these corrected control references.

2. A method as claimed in claim 1, **characterised in that** a first table is drawn up containing, for different points of operation of the engine, different calibrated crankshaft angle values each corresponding to a maximum pressure in the combustion chamber, these different calibrated maximum pressure angle values being processed to obtain the optimum efficiency of the engine, and **in that** a second table is drawn up defining, for these different points of operation, the calibrated control references of the variable turbulence generator corresponding to the calibrated maximum pressure angle values, and **in that**, for each point of operation of the engine, the corresponding calibrated control reference is extracted, the ionisation current of the combustion gases is measured (6) and a measured maximum pressure angle value is deduced therefrom, and the calibrated control reference extracted is corrected as a function of the difference between the calibrated maximum pressure angle value and the measured maximum pressure angle value, and **in that** the corrected reference is used to control (2) turbulence generator,

3. A control device for the combustion of an internal combustion engine equipped with a variable turbulence generator, comprising control means adapted to control the generator from control references calibrated for different points of operation of the engine, **characterised in that** it further comprises an ionisation probe (6) adapted to measure the ionisation current of the combustion gases, and **in that** the control means are adapted to correct the control references from the data supplied by the ionisation probe and to use these corrected control references to control the variable turbulence generator (1,2) .

4. A device as claimed in claim 3, **characterised in that** the control means comprise:
- a memory (MM) adapted to store a first table containing, for different points of operation of the engine, different calibrated crankshaft angle values each corresponding to ai maximum pressure in the combustion chamber, these different calibrated maximum pressure angle values being processed to obtain the optmium efficiency of the engine, and a second table defining, for these different points of operation, the calibrated control references of the variable turbulence generator corresponding to the calibrated maximum pressure angle values,
- an injection computer (3) adapted to extract the corresponding calibrated control reference from the memory for each point of operation of the engine, to deduce a measured maximum pressure angle value from the measurement of the ionisation current of the combustion gases carried out by the ionisation probe, and to correct the calibrated control reference extracted as a function of the difference between the calibrated maximum pressure angle value and the measured maximum pressure angle value,
and a control module (2) of the variable turbulence generator adapted to receive the corrected control reference and as a result to control this generator.
